# EUROPEAN PATENT SPECIFICATION

(11) **EP 0 654 756 B1**
(45) Date of publication and mention of the grant of the patent: **26.08.1998**
(21) Application number: 93203075.2
(22) Date of filing: 03.11.1993
(51) Int. Cl.: G06K 15/00, B65H 27/00, G01D 15/24

(54) **Drive roller for X-Y plotter**
Antriebsrolle für X-Y-Plotter
Rouleau d'entrainement pour traceur X-Y

(43) Date of publication of application: 24.05.1995
(73) Proprietor: Calcomp Display Products, 8470 Gistel (BE)
(72) Inventor: Verdonck, Gerard, B-8470 Gistel (BE); Raymaekers, Paul, B-8200 Brugge (BE)
(74) Representative: Jilderda, Anne Ayolt

(56) References cited:
- EP-A- 0 307 908
- PATENT ABSTRACTS OF JAPAN vol. 15, no. 124 (M-1097)26 March 1991 & JP-A-03 013 449 (KATO HATSUJO LTD) 22 January 1991
- PATENT ABSTRACTS OF JAPAN vol. 10, no. 368 (M-543)9 December 1986 & JP-A-61 162 453 (NIPPON TENSHIYASHI KK) 23 July 1986
- PATENT ABSTRACTS OF JAPAN vol. 10, no. 353 (M-539)28 November 1986 & JP-A-61 150 958 (YASHUHI HAMADA) 9 July 1986

## Description

The invention relates to a drive roller for the friction feed of (X-Y) plotters, cutters and the like for driving sheet material in cooperation with at least one pinch roller, the axis or axes of said pinch rollers being aligned and arranged in parallel with the axis of said drive roller (the Y-direction), the surface of which being provided with a plurality of projections each having the shape of a truncated wedge, for engaging said sheet material without slippage thereof.

A drive roller of this kind is known from JP-A-3-13449, wherein an X-Y plotter is disclosed of the type which moves a recording paper with no perforation by drive rollers and pinch rollers. A plurality of sharp projections is arranged on the outer surface of each of the drive rollers, such as to enable an exact feeding of the paper without any slippage. These projections are formed by cutting in the outer surface of each drive roller with V-grooves parallel and orthogonal to the shaft of the drive rollers. The projections have sharp tops, which are pressed against the paper to form holes or micro-apertures therein. By moving the paper to and fro, these holes are gradually enlarged which adversely affects the reliability and accuracy of the movement and position of the paper.

The invention is characterized in that the dimensions of the substantially flat top surface of the wedges are different in the X- and Y-direction, whereas the dimension extending in the direction of the axis of the roller (the Y-direction) is substantially larger than that in a direction perpendicular thereon (the X-direction), so that the flat top surface of each projection is rectangular.

The advantage is, that a far bigger grip surface is obtained as a result of which the pressure on this surface is smaller and the sheet material is less subjected to deformation caused by the high grip forces, whereas tracking is considerably improved.

Where in this application is spoken of grip surface, the plane perpendicular to the plane of the sheet material in the direction of the axis of the drive roller is meant and being gripped by said drive roller.

The advantage of the rectangular shape of the top surface of the wedges is the easier way of manufacturing and a better tracking.

In a further embodiment of a drive roller according to the invention, the wedges are arranged in rows extending in the direction of the axis of the roller (the Y-direction) as the case may be at equal distances of one another and in the circumferential direction in planes perpendicular to said axis.

This arrangement further improves the trackability as is the case with an alternative version of a drive roller according to the invention, in which the wedges are arranged in rows extending in the direction of the axis of the roller (the Y-direction) preferably at equal distances and along helixes with like helix angles.

The grip concept in the case of truncated wedges with a flat top surface, is very similar to the grip by a gear wheel on a rack. In this case the rack is formed by the sheet material end the teeth are being formed when said material passes between the drive roller and the pinch roller for the first time, whereas the plurality of truncated wedges forms a plurality of gear wheels on one axis. By the claimed arrangement of the wedges along rows in the direction of the axis of the drive roller, this plurality of teeth penetrate the sheet material at the same time.

A profitable ratio of the dimensions of the rectangular top surface is according to another embodiment of the invention about 1 to 5.

It will be clear, that it takes less force to penetrate the sheet material with the rectangular top surface of the wedge than with a truncated cone or pyramid having an identical top surface, since the wedge has better penetrating capabilities which results in a deeper imprint.

Of big importance is the fact, that the body of the wedge becomes bigger, the nearer it comes to its basis describing more or less an involute curve, which does not cause any damage to the sheet material, while moving it to and fro.

In a practical embodiment, the rectangular top surface is about 100 µm long and 20 µm wide and the height is about 100 µm. The wedges can be obtained in known manner by milling, knurling or etching.

The invention will now be described with reference to the accompanying drawings, wherein:
- Fig.1: shows a schematic view of the drive of an X-Y plotter;
- Fig.2: shows a drive roller;
- Fig.3: shows the arrangement and shape of the projections on the surface of the drive roller and
- Fig.4: shows the cooperation of the blunted wedge and the sheet material.

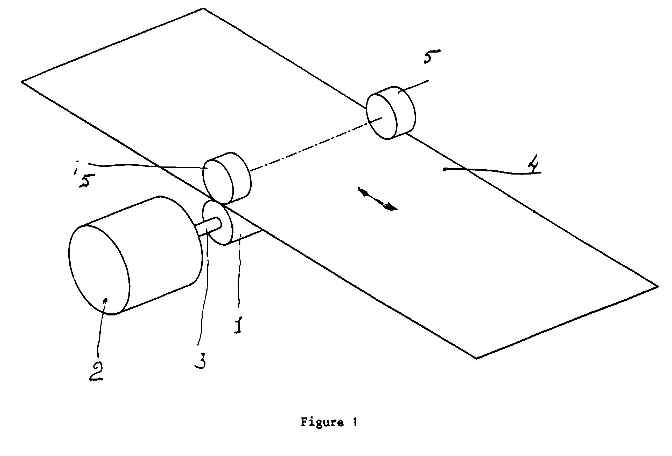

In Fig.1 the drive roller 1 is driven by the motor 2, which is preferably of the reversible type via a shaft 3 in order to move the sheet material 4, which is pinched between the drive roller 1 and the pinch rollers 5.

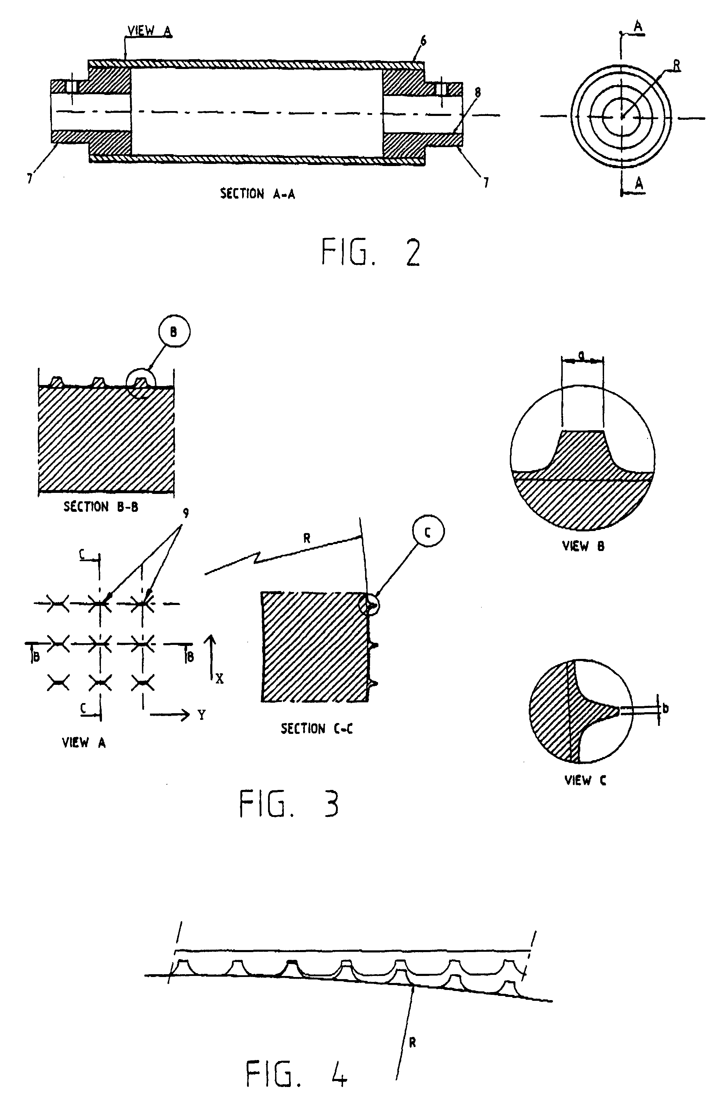

Fig.2 shows a cross-section of a possible construction of a drive roller 1 of Fig.1. Two hubs 7 are press-fitted into a drum 6. The hubs 7 are each provided with a hole 8 to be mounted to the shaft 3 of fig.1. On the surface of the drum 6 projections 9 are arranged, as shown in Fig.3, for obtaining the necessary friction between the drum 6 and the sheet material 4.

These projections have the shape of a truncated wedge with a substantially flat rectangular top surface. The longer dimension 'a' extends in the direction of the axis of the drum (the Y-direction), whereas the dimension in the direction perpendicular thereon (the X-direction) is the smaller one, preferably 1/5 of the longer one.

As shown in view A, the rows extend with the longest dimension 'a' of the wedges in the direction of the axis of the pressure roller.

In a practical embodiment, the dimension 'a' is about 0.1 of a millimeter and the dimension 'b' about 0.02 mm, whereas the height is about 0.1 mm.

As a matter of fact the invention is not restricted to these values as dependent on the kind of the material and the application these dimensions may be chosen differently.

It will be seen from Fig.4 how the truncated wedges penetrate the sheet material, forming the imprints such that by moving the material to and fro the edges of the wedge do not affect the flanges of the imprints thus formed.

## Claims

1. Drive roller for the friction feed of (X-Y) plotters, cutters and the like for driving sheet material in cooperation with at least one pinch roller, the axis or axes of said pinch roller being aligned and arranged in parallel with the axis of said drive roller (the Y-direction), the surface of which being provided with a plurality of projections each having the shape of a truncated wedge for engaging said sheet material without slippage thereof, characterized in that the dimensions of the top surface of the wedges are different in the X- and Y-direction, whereas the dimension extending in the direction of the axis of the roller (the Y-direction) is substantially larger than that in a direction perpendicular thereon (the X-direction), so that the flat top surface of each projection is rectangular.

2. Drive roller according to claim 1, characterized in that the projections are arranged in rows extending in the direction of the axis of the roller (the Y-direction) at equal distances of one another and in the circumferential direction in planes perpendicular to said axis.

3. Drive roller according to claim 1, characterized in that the projections are arranged at equal distances of one another and along a helix extending on the circumferential surface of the roller.

4. Drive roller according to any of the preceding claims, characterized in that the ratio of the dimension of the top surface of each projection in the X-direction and the dimension in the Y-direction is about 1 to 5.

## Patentansprüche

1. Antriebsrolle für den Friktionsantrieb von (X-Y) Plottern, Schneidemaschinen und dergleichen zum Antrieb von Blattmaterial in Zusammenarbeit mit mindestens einer Klemmrolle, wobei die Achse oder Achsen von besagter Klemmrolle parallel zur Achse der besagten Antriebsrolle (in Y-Richtung) ausgerichtet und angeordnet ist oder sind, wovon die Oberfläche mit einer Vielzahl Vorsprüngen versehen ist, jeder mit der Form eines abgestumpften Keils, um das besagte Blattmaterial ohne Schlupf zu greifen, dadurch gekennzeichnet, daß die Abmessungen der Oberseite der Keile in der X- und Y-Richtung unterschiedlich sind, während die Abmessungen in der Richtung der Rollenachse (die Y-Richtung) bedeutend größer als die Abmessung in einer Richtung senkrecht hierzu (die X-Richtung) ist, so daß die flache Oberseite eines jeden Vorsprungs ein Rechteck bildet.

2. Antriebsrolle nach Anspruch 1, dadurch gekennzeichnet, daß die Vorsprünge in Reihen angeordnet sind, die in der Richtung der Rollenachse (der Y-Richtung) mit gleichen Abständen zueinander und in Umfangsrichtung in Ebenen senkrecht zu der besagten Achse verlaufen.

3. Antriebsrolle nach Anspruch 1, dadurch gekennzeichnet, daß die Vorsprünge in gleichen Abständen zueinander und entlang einer Schraubenlinie, die auf der Mantelfläche der Rolle verläuft, angeordnet sind.

4. Antriebsrolle nach irgendeinem der vorhergehenden Ansprüche, dadurch gekennzeichnet, daß das Verhältnis der Abmessung der Oberseite jedes Vorsprungs in der X-Richtung zur Abmessung in der Y-Richtung ungefähr 1 zu 5 ist.

## Revendications

1. Rouleau d'entraînement pour l'alimentation par frottement de traceurs (X-Y), de coupeurs et d'appareils similaires utilisés pour l'entraînement de matières laminées, en conjonction avec au moins un rouleau de pincement, l'axe ou les axes dudit rouleau de pincement étant aligné(s) et disposé(s) parallèlement à l'axe dudit rouleau d'entraînement (axe Y), la surface duquel est munie de plusieurs protubérances afin de permettre l'introduction desdites matières laminées sans que celles-ci glissent, caractérisé en ce que chacune des protubérances ayant la forme d'une cale tronquée, les dimensions de la surface supérieure des cales sont différentes dans l'axe X et dans l'axe Y, tandis que la dimension parallèle à l'axe du rouleau (axe Y) est beaucoup plus grande que la dimension perpendiculaire à ce même axe (axe X), de telle façon que la surface supérieure plate de chaque protubérance est rectangulaire.

2. Rouleau d'entraînement selon la revendication 1, caractérisé en ce que les protubérances sont disposées en rangs dans l'axe du rouleau (axe Y) à distance égale les unes des autres, et dans le sens circonférentiel des plans perpendiculaires audit axe.

3. Rouleau d'entraînement selon la revendication 1, caractérisé en ce que les protubérances sont disposées à distance égale les unes des autres et le long d'une hélice disposée sur la surface circonférentielle du rouleau.

4. Rouleau d'entraînement selon l'une quelconque des revendications précédentes, caractérisé en ce que le rapport entre la dimension de la surface supérieure de chaque protubérance dans l'axe X et la dimension de cette surface dans l'axe Y est d'environ 1 à 5.
